# EUROPEAN PATENT APPLICATION

(11) **EP 4 489 201 A1**
(43) Date of publication of application: **08.01.2025**
(21) Application number: 23759842.0
(22) Date of filing: 16.02.2023
(51) Int. Cl.: H01M 50/291, H01M 50/204, H01M 50/249, H01M 50/293, H01M 50/342, H01M 50/367, H01M 50/503, H01M 50/505

(54) **BATTERY HOLDER AND BATTERY PACK**

(30) Priority: 28.02.2022 JP 2022029258
(71) Applicant: Panasonic Intellectual Property Management Co., Ltd., Kadoma-shi, Osaka 571-0057 (JP)
(72) Inventor: SAKAGAWA, Yasuaki, Kadoma-shi, Osaka 571-0057 (JP)
(74) Representative: Novagraaf International SA
(86) International application number: PCT/JP2023/005362
(87) International publication number: WO 2023/162841

(57) **Abstract**

A first battery holder (50) holds at least a section, in the height direction, of a plurality of batteries (40) which are aligned and arranged. The first battery holder has openings (8a) that oppose an end surface on a formation side of an exhaust valve in the height direction of the plurality of batteries (40). The first battery holder (50) has exhaust passages (94a, 94b) that discharge a gas jetted from the exhaust valve. The first battery holder (50) has a head part (55) protruding to the side opposite the battery (40) side in the height direction. The head part (55) is provided at a position corresponding to an area between adjacent batteries (40) from among the plurality of batteries (40), and is provided between the opening (8a) corresponding to the adjacent batteries (40).

## Description

### TECHNICAL FIELD

The present disclosure relates to a battery holder and a battery pack.

### BACKGROUND ART

Conventionally, one battery pack is described in Patent Literature 1. That battery pack includes a partition member made of resin and two sheet members made of mica and having thermal insulation. The partition member is arranged between two adjacent cylindrical batteries. The partition member includes a first curved surface having a shape corresponding to a part of the side surface of one cylindrical battery and a second curved surface having a shape corresponding to a part of the side surface of the other cylindrical battery. One sheet member is sandwiched between the side surface of one cylindrical battery and the first curved surface, and the other sheet member is sandwiched between the side surface of the other cylindrical battery and the second curved surface.

In this battery pack, a partition member sandwiched on both sides thereof by two sheet members having thermal insulation is arranged between two adjacent cylindrical batteries. Therefore, when one cylindrical battery generates abnormal heat, the two sheet members can suppress the heat generated by the cylindrical battery from conducting to the other cylindrical battery. Therefore, even if any one of the cylindrical batteries in the battery pack generates abnormal heat, the influence of abnormal heat generation is unlikely to extend to other cylindrical batteries.

### CITATION LIST

### PATENT LITERATURE

PATENT LITERATURE 1: Japanese Unexamined Patent Application Publication No. 2012-033464

### SUMMARY

If the distance between adjacent batteries can be reduced, the compactness of battery pack can be realized, but even in such a case, if the influence of abnormal heat generation of a battery on other batteries can be effectively suppressed, a battery pack with improved safety can be produced, which is favorable. Accordingly, it is an object of the present disclosure to provide a battery holder and a battery pack which are easy to be made compact and easy to be improved in safety.

In order to solve the above described problem, a battery holder according to the present disclosure is a battery holder holding at least a part in a height direction of a plurality of batteries which are arranged in an alignment, the battery holder comprising: an opening facing an end surface on a formation side of an exhaust valve in a height direction of the plurality of batteries; and an exhaust path that discharges a gas ejected from the exhaust valve, wherein a head protruding to the side opposite the battery side in the height direction is provided, and the head is provided in a corresponding position between adjacent batteries among the plurality of batteries and is provided between each openings corresponding to the adjacent batteries.

According to the battery holder relating to the present disclosure, it is easy to be made compact and easy to be improved in safety.

### BRIEF DESCRIPTION OF DRAWING

FIG. 1 is a perspective view in which the internal structure of a battery pack according to one embodiment of the present disclosure can be seen.
FIG. 2 is a schematic sectional view of the above described battery pack.
FIG. 3 is a schematic plan view of a holder assembly, in which all battery accommodation chambers accommodate batteries, and a current collector plate, when viewed from the head side in the height direction.
FIG. 4 is a schematic sectional view at A-A line of FIG. 3.
FIG. 5 is a schematic sectional view on one side in the axial direction of the above described battery pack.
FIG. 6 is a schematic plan view of a holder assembly, in which all the battery accommodation chambers accommodate batteries, when viewed from the first holder side in the height direction.
FIG. 7 is a schematic plan view corresponding to FIG. 3 of a variation of the battery pack.
FIG. 8 is a plan view of a sheet when viewed from one side in its thickness direction.
FIG. 9 is a schematic plan view corresponding to FIG. 5 of another variation of the battery pack.
FIG. 10 is a schematic plan view corresponding to FIG. 6 of a further variation of the battery pack.
FIG. 11 is a schematic plan view corresponding to FIG. 6 of a further variation of the battery pack.
FIG. 12 is a schematic plan view corresponding to FIG. 11 of a further variation of the battery pack.
FIG. 13 is a schematic plan view corresponding to FIG. 3 of a further variation of the battery pack.

### DESCRIPTION OF EMBODIMENTS

Hereinafter, embodiments according to the present disclosure will be described in detail with reference to the accompanying drawings. Note that when a plurality of embodiments, variations and the like are included in the following, it is assumed from the beginning that a new embodiment is constructed by appropriately combining characteristic features thereof. Moreover, in the following examples, same reference numerals are attached to same configurations in the drawings, and duplicate descriptions are omitted. Further, the plurality of drawings include schematic figures, and the dimensional ratios such as in length, width, and height in each member do not necessarily match between different figures. Further, among the components described below, components not described in the independent claims which indicate the highest concept, are optional components and are not essential components.

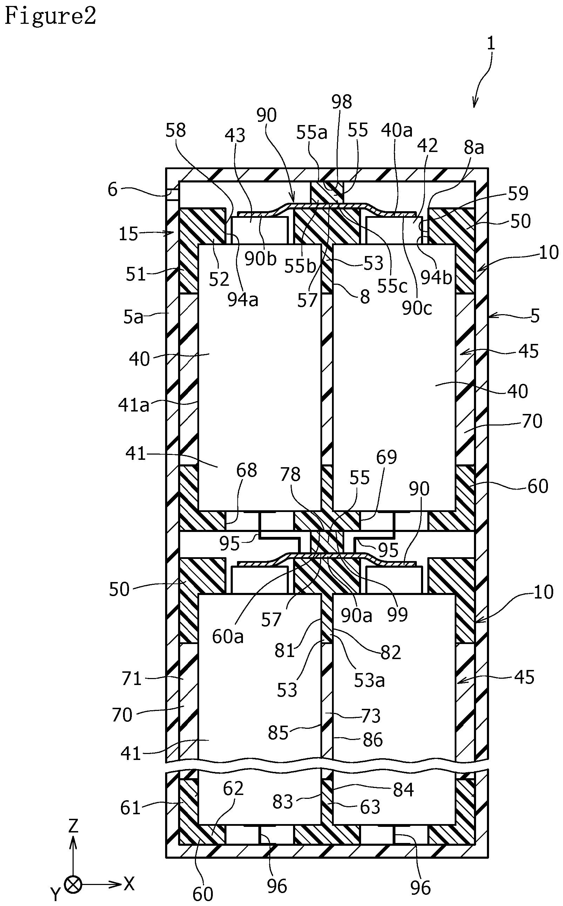

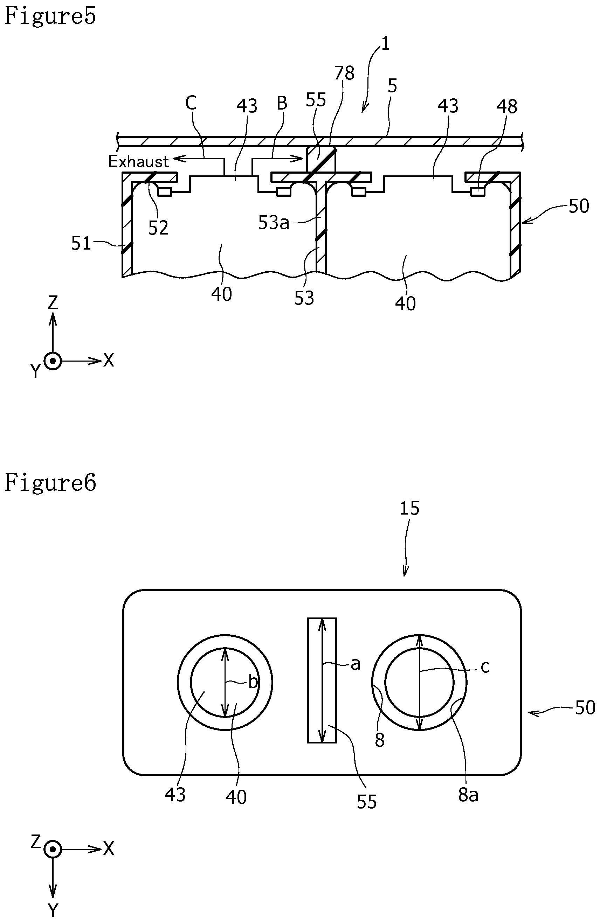

In the following description, the height direction is a direction parallel to the axial direction (height direction) of a battery 40 accommodated by the first holder 50 and is a direction parallel to the central axis of a battery accommodation chamber 8. In the following, description will be made on a case in which the battery 40 is a cylindrical battery 40 (see FIG. 2) having a cylindrical outer can 41 with a bottom, an electrode assembly (not shown) arranged in the outer can 41, and a sealing assembly 42 that seals the opening of the outer can 41 via an insulating gasket 48 (see FIG. 5). In the following description, an exhaust valve is defined as an ejection port which is designed such that hot gas is ejected therethrough when the battery 40 generates abnormal heat. In the following, description will be made on a case in which an exhaust valve (ejection port) that exhausts hot gas in the cylindrical battery 40 as a result of breaking of a part of the sealing assembly 42 when the cylindrical battery 40 generates abnormal heat is existent in the protruding terminal 43 included in the sealing assembly 42 of the battery 40. However, the battery may be a cylindrical battery which has an exhaust valve both in the sealing assembly of the battery case and at the bottom of the outer can, or a cylindrical battery which has an exhaust valve only at the bottom of the outer can. Alternatively, the battery does not have to be a cylindrical battery, and may be, for example, a prismatic battery or the like.

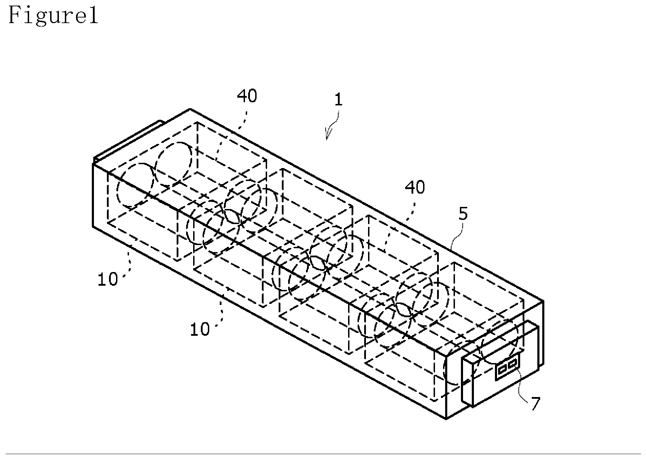

FIG. 1 is a perspective view in which the internal structure of a battery pack 1 according to one embodiment of the present disclosure can be seen. As shown in FIG. 1, the battery pack 1 comprises a case 5 and one or more battery blocks 10 accommodated in the case 5. The case 5 is made of, for example, a metal material such as aluminum, a resin material, or the like. The battery block 10 includes a plurality of cylindrical batteries (hereinafter simply referred to as batteries) 40 that are located at a substantially identical position in the height direction and are arranged substantially in parallel, and the plurality of batteries 40 are electrically connected. The plurality of batteries 40 may be connected in parallel, in series, or electrically connected using both parallel and series connections. In the example shown in FIG. 1, the battery block 10 has two batteries 40 connected in parallel. As will be described later, in the examples described in FIG. 1 and FIG. 2 below, the battery pack 1 has a connection structure that electrically connects a plurality of battery blocks 10.

The connection structure may include, for example, at least one of one or more wirings and one or more busbars, at least one of which may be accommodated in an internal chamber defined by the case 5, and if the case 5 is made of resin, it may be embedded in the case 5. Alternatively, the at least one of them may have both a portion to be accommodated in the internal chamber defined by the case 5 and a portion to be embedded in the resin case 5 made of resin.

The plurality of battery blocks 10 are electrically connected by a connection structure in at least one of a series connection and a parallel connection. When the plurality of battery blocks 10 have two or more battery blocks 10 connected in series, the voltage of the battery pack 1 can be increased. Further, when the plurality of battery blocks 10 have two or more battery blocks 10 connected in parallel, the capacity of the battery pack 1 can be increased.

The case 5 is provided with an external terminal 7 that is exposed to the outside and is connectable from the outside. The external terminal 7 is electrically connected to a plurality of battery blocks 10 via the connection structure. The external terminal 7 is used as a terminal for supplying DC voltage when the battery pack 1 is mounted to an on-board equipment, for example, an electrically assisted bicycle, or the like. The external terminal 7 may be used for charging the battery 40 contained in the battery pack 1. The external terminal 7 may be provided in only one place in the case 5 or may be provided in a plurality of places in the case 5.

FIG. 2 is a schematic sectional view of the battery pack 1. As shown in FIG. 2, the battery block 10 comprises a holder assembly 15 that binds the two batteries 40 in one piece. The holder assembly 15 determines a relative position of the second battery 40 with respect to the first battery 40 and prohibits relative movement of the second battery 40 with respect to the first battery 40. Each of the first battery 40 and the second battery 40 has a protruding terminal 43 that protrudes to one side in the height direction in the middle of the end surface on one side in the height direction. The holder assembly 15 comprises a first holder 50 that holds one end part in the height direction of each of the first battery 40 and the second battery 40, a second holder 60 that holds the other end part in the height direction of each of the first battery 40 and the second battery 40, respectively, and a third holder 70 that holds a side surface of an intermediate part in the height direction of each of the first battery 40 and the second battery 40. Each of the first holder 50, the second holder 60, and the third holder 70 is preferably made of a thermoplastic resin or a thermosetting resin.

Each of the first holder 50, the second holder 60, and the third holder 70 may be made of, for example, a high thermal conductivity PPS (polyphenylene sulfide) resin, a resin containing a heat dissipation filler, or the like. Further, each of the first holder 50, the second holder 60, and the third holder 70 may be made of an injection-moldable thermosetting resin, and more specifically, a phenolic resin, an unsaturated polyester, or an unsaturated polyester mixed with an endothermic agent. Alternatively, each of the first holder 50, the second holder 60, and the third holder 70 may be made of an inorganic mineral such as mica, or a material in which an inorganic mineral such as mica is mixed with a resin material.

The first holder 50 is an example of the battery holder of the present disclosure and is formed of a resin in one piece. The first holder 50 includes an annular side part 51, a sheathing 52, and a partition 53. The side part 51 is arranged so as to surround one end part in the height direction in a portion other than the protruding terminal 43 in the two batteries 40. Further, the sheathing 52 spreads in an orthogonal direction substantially orthogonal in the height direction and covers a part of the one end surface in the height direction of each battery 40. Further, the partition 53 is a portion that partitions between two adjacent batteries 40 and includes a first cylindrical inner peripheral surface portion 81 corresponding to one side in the height direction of the cylindrical outer peripheral surface of the outer can 41 of the first battery 40, and a second cylindrical inner peripheral surface portion 82 corresponding to one side in the height direction of the cylindrical outer peripheral surface of the outer can 41 of the second battery 40. The first and second cylindrical inner peripheral surface portions 81 and 82 are formed of a part in the circumferential direction of the cylindrical inner peripheral surface.

The first holder 50 constrains the head side having the protruding terminal 43 in the height direction of a battery pair 45 constituted of the two batteries 40 included in the battery block 10 and holds two batteries 40 on the head side in the height direction of the battery pair 45. That is, the side on which the side part 51 and the partition 53 of the first holder 50 are formed becomes a head holding side for holding the head side of the plurality of batteries 40. The battery 40 used in the embodiment shown in FIG. 2 has the protruding terminal 43, but the battery may be a form not having a protruding terminal. The side part 51, the sheathing 52, and the partition 53 define at least one of each battery accommodation chamber 8 in a plurality of battery accommodation chambers 8 that accommodate a plurality of batteries 40. The partition 53 has a head 55 that protrudes in the height direction to a position higher than the opening 8a of the battery accommodation chamber 8. The head 55 is formed in one piece on a surface on the side opposite the side of the plurality of batteries 40 of the first holder 50. The height in the height direction of the tip 55a of the head 55 is higher than the position in the height direction of the tip of the battery 40 and is higher than the position in the height direction of the exhaust valve of the battery 40. The head 55 includes a portion 55b that overlaps with one battery accommodation chamber 8 in the height direction and a portion 55c that overlaps with the other battery accommodation chamber 8 in the height direction.

The plurality of batteries 40 accommodated in the plurality of battery accommodation chambers 8 are located in a substantially same height range in the height direction. The plurality of battery accommodation chambers 8 accommodate a plurality of batteries 40 in the same orientation. In the example shown in FIG. 2, each battery 40 is arranged such that the protruding terminal 43 is located on the side of the head 55 in the height direction. The partition 53 has a slit 57 extending in a direction orthogonal to the height direction. The battery pack 1 comprises a current collector plate 90. The current collector plate 90 is made of a material having conductivity, such as a metal, and is made of, for example, aluminum or nickel. The current collector plate 90 includes an accommodated part 90a to be accommodated in the slit 57.

The current collector plate 90 has a first bending portion 90b that bends in two stages at a position that overlaps in the height direction with the opening 8a of one battery accommodation chamber 8a, and the tip side of the first bending portion 90b has elasticity and presses the protruding terminal 43 of the battery 40 accommodated in the one battery accommodation chamber 8 thereby contacting the protruding terminal 43. Similarly, the current collector plate 90 has a second bending portion 90c that bends in two steps at a position that overlaps in the height direction with the opening 8a of the other battery accommodation chamber 8, and the tip side of the second bending portion 90c has elasticity and presses the protruding terminal 43 of the battery 40 accommodated in the other battery accommodation chamber 8, thereby contacting the protruding terminal 43.

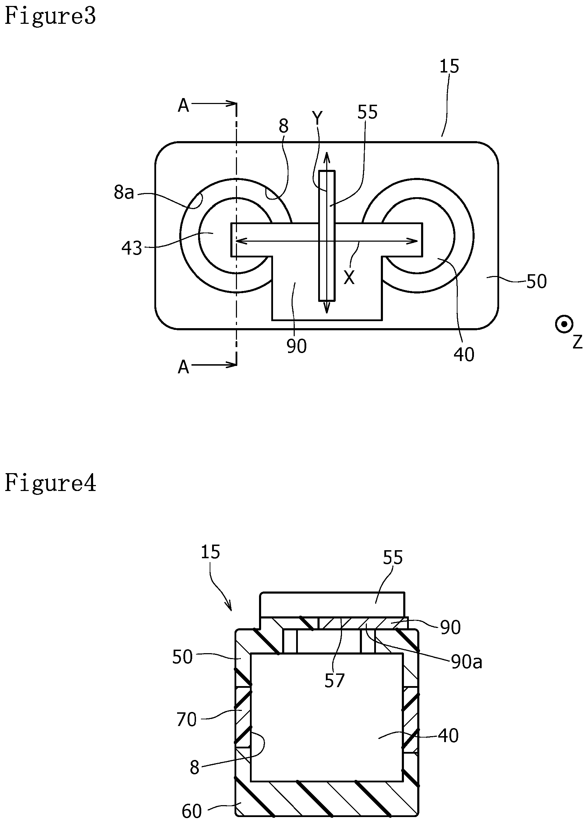

FIG. 3 is a schematic plan view of a holder assembly 15, in which all the battery accommodation chambers 8 accommodate the batteries 40, and the current collector plate 90, when viewed from the head 55 side in the height direction, and FIG. 4 is a schematic sectional view at A-A line of FIG. 3. As shown in FIG. 3, the head 55 is configured such that when a direction which is orthogonal to both the extending direction (indicated by arrow X in FIG. 3) of a line connecting the centers of each opening 8a of the two adjacent battery accommodation chambers 8 and the height direction (indicated by Z in FIG. 3) is supposed to be an orthogonal direction (the direction indicated by arrow Y in FIG. 3), the dimension in the Y direction of the head 55 is larger than the dimension in the Y direction of the protruding terminal 43 of the battery 40, and is larger than the dimension in the Y direction of the exhaust valve of the battery 40. Furthermore, the dimension of the head 55 in the Y direction is larger than the dimension in the Y direction of the circular opening 8a (diameter of the opening 8a) of the battery accommodation chamber 8.

The current collector plate 90 has a planar and substantially T-like shape, and the dimension in the Y direction of the portion accommodated in the slit 57 is larger than the dimension in the Y direction of the portion in contact with the protruding terminal 43 and is equal to the dimension in the Y direction of the head 55. As shown in FIG. 4, in the present embodiment, the height of the slit 57 is equal to or slightly smaller than the thickness of the current collector plate 90, and for example, by pressing the current collector plate 90 into the slit 57, only the current collector plate 90 is accommodated in the slit 57. However, the height of the slit may be larger than the thickness of the current collector plate so that the current collector plate and a sheet are accommodated in the slit.

In that case, the sheet is made of a fireproof sheet or a non-flammable sheet and is made of, for example, a thermosetting resin (for example, phenolic resin, unsaturated polyester resin, silicone resin, polyurethane resin, etc.) or a non-flammable material (for example, inorganic minerals, ceramics, metals, etc.). As a result, when one battery 40 generates abnormal heat, the heat released by the battery 40 can be further suppressed by the sheet from influencing the other batteries 40, thereby realizing a safe battery pack 1.

As shown in FIG. 2, the dimension in the above-described X-direction of the head 55 is larger than the dimension in the X-direction of a portion 53a that partitions the cylindrical outer peripheral surfaces of outer cans of adjacent batteries in the partition 53. The second holder 60 is formed in one piece and includes an annular side part 61, a sheathing 62, and a partition 63. The side part 61 is arranged so as to surround an end part on the other side (on the side of the can bottom) in the height direction of the two batteries 40. Further, the sheathing 62 spreads in an orthogonal direction substantially orthogonal to the height direction and covers a part of the bottom surface on the other side in the height direction of the battery 40. Further, the partition 63 is a portion that partitions between two adjacent batteries 40 and includes a first cylindrical inner peripheral surface portion 83 corresponding to the other side in the height direction of the cylindrical outer peripheral surface of the outer can 41 of the first battery 40, and a second cylindrical inner peripheral surface portion 84 corresponding to the other side in the height direction of the cylindrical outer peripheral surface of the outer can 41 of the second battery 40. The first and second cylindrical inner peripheral surface portions 83 and 84 are formed of a portion in the circumferential direction of the cylindrical inner peripheral surface.

The second holder 60 differs from the first holder 50 in that the head 55 and the slit 57 are not existent. The second holder 60 constrains the can bottom side in the height direction of the battery pair 45 constituted of the two batteries 40 included in the battery block 10 and holds the two batteries 40 on the can bottom side in the height direction of the battery pair 45. The annular side part 61, the sheathing 62, and the partition 63 define an area on the can bottom side in the height direction of the battery accommodation chamber 8. The second holder 60 prevents the two batteries 40 from being separated at the bottom side in the height direction.

The third holder 70 is formed in one piece and includes an annular side part 71 and a partition 73. The side part 71 is arranged so as to surround a middle part in the height direction of the two batteries 40. Further, the partition 73 is a portion that partitions between two adjacent batteries 40 and includes a first cylindrical inner peripheral surface portion 85 corresponding to the middle part in the height direction of the cylindrical outer peripheral surface of the outer can 41 of the first battery 40, and a second cylindrical inner peripheral surface portion 86 corresponding to the middle part in the height direction of the cylindrical outer peripheral surface of the outer can 41 of the second battery 40. The first and second cylindrical inner peripheral surface portions 85 and 86 are formed of a part in the circumferential direction of the cylindrical inner peripheral surface.

The third holder 70 constrains the middle part in the height direction of the battery pair 45 constituted of the two batteries 40 included in the battery block 10 and holds the two batteries 40 at the middle part in the height direction of the battery pair 45. The annular side part 71 and the partition 73 define an area of the middle part in the height direction of the battery accommodation chamber 8. The third holder 70 prevents the two batteries 40 from being separated at the middle part in the height direction.

The first holder 50 has a first cylindrical hole 58 at a position that overlaps in the height direction with the circular middle part of the outer can 41 of the first battery 40, and a second cylindrical hole 59 at a position that overlaps in the height direction with the circular middle part of the outer can 41 of the second battery 40. Each of the first and second cylindrical holes 58 and 59 is a through hole. That is, the first holder 50 has an opening which is a through hole at a position facing in the height direction the exhaust valve on the head side of each of the first and second batteries 40. The cylindrical holes 58 and 59 are used, for example, to electrically connect the first battery 40 to the second battery 40 and to electrically connect the battery block 10 to the battery block 10 adjacent in the height direction. Further, the cylindrical hole 58 has a role as a gas discharge path that leads the gas ejected from the exhaust valve of the first battery 40 to the outside of holder defined by the first holder 50 when the first battery 40 generates abnormal heat, and the cylindrical hole 59 plays a role of a gas discharge path that leads the gas ejected from the exhaust valve of the second battery 40 to the outside of holder defined by the first holder 50 when the second battery 40 generates abnormal heat.

Further, the second holder 60 has a first cylindrical hole 68 at a position that overlaps in the height direction with the circular middle part of the outer can 41 of the first battery 40, and a second cylindrical hole 69 at a position that overlaps in the height direction with the circular middle part of the outer can 41 of the second battery 40. Each of the first and second cylindrical holes 68 and 69 is a through hole. That is, the second holder 60 has an opening which is a through hole at a position facing the end surface on can bottom side of each of the first and second batteries 40. The cylindrical holes 68 and 69 are used, for example, to electrically connect the first battery 40 to the second battery 40 and to electrically connect the battery block 10 to the battery block 10 which is adjacent thereto in the height direction. In the present embodiment, the two batteries 40 included in each battery block 10 are connected in parallel, and the two battery blocks 10 adjacent in the height direction are connected in series.

As shown in FIGS. 1 and 2, in the battery pack 1, a plurality of battery blocks 10 are arranged in a row in the height direction. As shown in FIG. 2, regarding two battery blocks 10 adjacent in the height direction, the bottom of the outer can 41 of each battery 40 of one battery block 10 is electrically connected to the current collector plate 90 of the other battery block 10 by the bus bar 95. Further, the current collector plate 90 of the battery block 10 located at one end in the height direction of the battery pack 1 is electrically connected to one electrode of an external terminal 7 (not shown in FIG. 2), and the bottom of the outer can 41 of each battery 40 of the battery block 10 which is located at the other end in the height direction of the battery pack 1 is electrically connected to the other electrode of the external terminal 7 via the bus bar 95 and wiring not shown. Thereby, regarding each battery block 10, the first battery 40 and the second battery 40 are connected in parallel, and a plurality of battery blocks 10 are connected in series.

The battery pack 1 includes a partition contact portion that contacts the tip surface (top surface) 78 in the height direction at the head 55. Specifically, the tip surface 78 constituting one end part in the height direction of the head 55 of the battery block 10 illustrated at the top of FIG. 2 is in contact with the inner surface of the case 5. Therefore, a place 98 in contact with the tip surface 78 in the case 5 forms a partition contact portion. Further, the tip surface 78 constituting one end part in the height direction of the head 55 of the battery block 10 located at the second from the top of FIG. 2 is in contact with a bottom surface 60a of the second holder 60 of the battery block 10 shown at the top of FIG. 2. Therefore, the place 99 in contact with the tip surface 78 of the head 55 of the adjacent battery block 10 on the bottom surface 60a of the second holder 60 is also a partition contact portion.

As shown in FIG. 2, the case 5 of the battery pack 1 has one or more through holes 6. In the present embodiment, one through hole 6 is provided at one end part in the height direction of the side wall 5a of the case 5. There is a gap between the cylindrical outer peripheral surface 41a of the outer can 41 of the battery 40 and the inner peripheral surface of the battery accommodation chamber 8. In the battery pack 1, when one of the batteries 40 generates abnormal heat and a hot gas or ejected substance are discharged from the battery 40, the hot gas or ejected substance are made to pass through the battery accommodation chamber 8 or the like, thereafter being discharged to the outside via the through hole 6.

As described above, the first battery holder 50 holds at least a part in the height direction of the plurality of batteries 40 arranged in an alignment. The first battery holder 50 has an opening 8a facing the end surface on the exhaust valve forming side in the height direction of the plurality of batteries 40. Further, the first battery holder 50 has exhaust paths 94a, 94b that discharge the gas ejected from the exhaust valve. In the present embodiment, although the exhaust path 94a (see FIG. 2) is constituted of the cylindrical inner peripheral surface of the first cylindrical hole 58, and the exhaust path 94b (see FIG. 2) is constituted of the cylindrical inner peripheral surface of the second cylindrical hole 59, the discharge path may not be constituted of the cylindrical inner peripheral surface. The first battery holder 50 has a head 55 protruding to the opposite side to the battery 40 side in the height direction. The head 55 is provided at a position corresponding to between the adjacent batteries 40 among the plurality of batteries 40 and is provided between the openings 8a corresponding to adjacent batteries 40 respectively.

According to the first battery holder 50, even if the battery 40 generates abnormal heat, and a hot gas or ejected substance is ejected from the battery 40, the head 55 can suppress the hot gas or ejected substance from reaching the adjacent battery 40, thus suppressing the influence of the battery 40 that has generated abnormal heat from reaching adjacent batteries 40. Further, reducing the wall thickness of the partition between the cylindrical outer peripheral surfaces of the two adjacent batteries 40 of the outer can 41 and increasing the thickness of the head 55 allows not only to suppress the influence of the abnormally heated battery 40 from extending to the adjacent batteries 40, but also to configure the first battery holder 50 compactly.

Further, the battery pack 1 comprises a side part 51 that is disposed so as to surround at least a portion in the height direction in the plurality of batteries 40 arranged in an alignment, and a first holder 50 in one piece including the partition 53 that partitions between two adjacent batteries 40. The first holder 50 also defines at least a part in the height direction of each battery accommodation chamber 8 in a plurality of battery accommodation chambers 8 that accommodate a plurality of batteries 40. Further, the partition 53 has a head 55 that protrudes to a position higher in the height direction than the opening 8a of the battery accommodation chamber 8. Further, the head 55 includes a portion 55b that overlaps in the height direction (Z direction) with one battery accommodation chamber 8 in the adjacent two battery accommodation chambers 8, and a portion 55c that overlaps in the height direction with the other battery accommodation chamber 8 in the two battery accommodation chambers 8.

It is assumed that the partition of the first holder does not have a head, but has only a planar partition, and the surrounding of the protruding terminal is also partitioned by a planar partition. At this time, if one battery generates abnormal heat and the exhaust valve operates, a part of the hot gas or ejected substance is ejected from the surrounding of the protruding terminal to the partition side. At this time, if the thickness of the partition is thin, there is a risk that a hole is made in the partition, and a hot gas or ejected substance will reach the adjacent battery, and the influence of the abnormally heated battery reaches the adjacent battery. Therefore, the thickness of the partition cannot be reduced, and it is difficult to make the battery pack compact.

On the other hand, according to the first holder 50 of the present disclosure, the partition 73 has a thick, block-like head 55, which has a portion 55b, 55c overlapping in the height direction with each of the two adjacent battery accommodation chambers 8, on one side in the height direction. Therefore, even if one battery 40 generates abnormal heat, and the exhaust valve operates, as shown in FIG. 5, that is, a schematic sectional view of one side in the axial direction of the battery pack 1 (the slit 57 or the like is omitted), the head 55 can block the hot gas or ejected substance released from the surrounding of the protruding terminal 43 in the direction indicated by arrow B, thereby making it possible to effectively suppress the hot gas or ejected substance released from the surrounding of the protruding terminal 43 from reaching the adjacent battery 40.

Furthermore, since safety can be ensured at the head 55, the thickness of the portion 53a that partitions between the outer cans 41 among the partitions 53 that partition between the adjacent batteries 40 can be set independently from the head 55. Therefore, it is not necessary to increase the dimension in the X direction of the battery 40 of the battery pack 1, and it is easy to make the battery pack 1 compact. Therefore, according to the battery pack 1, it is possible to concurrently realize both actions and effects which are in a mutually contradictory trade-off relationship, that is, actions and effects that the distance between adjacent batteries can be easily reduced and the battery pack 1 is easy to be made compact, and actions and effects that the influence of abnormal heat generation of one battery can be effectively suppressed from extending to other batteries, and thus safety can be easily improved.

Further, the battery pack 1 may comprise a first holder 50 and a case 5 that accommodates the first holder 50, and the case 5 may have one or more through holes 6.

According to the present configuration, as shown in FIG. 5, a hot gas or ejected substance blocked from flowing to the adjacently located battery 40 by the head 55 can be made to flow to the side of the case 5 as indicated by arrow C and can be discharged to the outside via a through hole 6. Therefore, the temperature in the battery pack 1 can be reduced in comparison with the case where all of the hot gas or ejected substance remains in the case 5 so that the safety of the battery pack 1 can be improved.

Further, the plurality of battery accommodation chambers 8 may accommodate a plurality of batteries 40 in the same orientation.

In the battery 40, if a gasket 48 that insulates the outer can 41 constituting the negative electrode from the sealing assembly including the protruding terminal 43 constituting the positive electrode is damaged, short circuiting of the battery 40 occurs, and therefore it is important to protect the gasket 48. In such a background, when a plurality of batteries 40 are accommodated in the same orientation, as shown in FIG. 5, and when the gasket 48 and the exhaust valve are located at a similar height position in the battery 40, if the hot gas or ejected substance ejected from the battery 40 flows into the adjacent battery 40, the gasket 48 of the adjacent battery 40 is likely to be damaged, which is unfavorable. Therefore, the actions and effects of the art of the present disclosure, that is, the actions and effects of blocking a hot gas or ejected substance at the head 55 can be made exceptionally remarkable.

Further, as shown in FIG. 5, the height in the height direction of the tip 55a of the head 55 may be higher than the height in the height direction of the exhaust valve of the battery 40.

According to the present configuration, the effect of suppressing the hot gas or ejected substance ejected from the battery 40 from flowing to an adjacent battery 40 can be made remarkable.

Further, as shown in FIG. 5, when the battery pack 1 comprises a partition contact part that contacts the tip surface 78 in the height direction at the head 55, the hot gas or ejected substance ejected from the battery 40 can be more effectively suppressed from flowing to an adjacent battery. Therefore, it is possible to more effectively prevent the influence of the battery 40 which has exhibited abnormality, from extending to an adjacent battery 40.

Further, as shown in FIG. 6, that is, a schematic plan view of the holder assembly 15 in a state where all the battery accommodation chambers 8 accommodate batteries 40 when viewed from the first holder 50 side in the height direction, when the direction orthogonal to both the extending direction (X direction) of the line connecting the centers of each of the openings 8a of the two adj acent battery accommodation chambers 8 and the height direction (Z direction) is supposed to be an orthogonal direction (Y direction), the dimension "a" in the Y direction of the head 55 may be larger than the dimension "b" in the Y direction of the exhaust valve of the battery 40.

According to the present configuration, from the relationship between the length of the diameter of the exhaust valve of the battery 40 and the length of the head 55 in the direction (Y direction) orthogonal to the alignment direction of the battery, since the head 55 blocks the path on the XY plane where the hot gas or ejected substance ejected from the battery 40 that exhibited abnormality to the exhaust path defined by the first holder 50 via the opening 8a directly enters the opening 8a corresponding to the adjacent battery 40, it is possible to more effectively suppress the hot gas or ejected substance ejected by the battery 40 from flowing to the side of the adjacently located battery 40.

Further, dimension a in the Y direction of the head 55 may be larger than dimension c in the Y direction of the opening 8a.

According to the present configuration, from the relationship between the length of the diameter of the opening 8a of the battery 40 and the length of the head 55 in the direction (Y direction) orthogonal to the alignment direction of the battery, since the head 55 blocks the path on the XY plane where the hot gas or ejected substance from the abnormal battery 40 directly enters the opening 8a for the adjacent battery 40, it is possible to more effectively suppress the hot gas or ejected substance ejected by the battery 40 from flowing to the side of the adjacently located battery 40.

Further, the first holder 50 may be made of a thermoplastic resin or a thermosetting resin.

According to the present configuration, since the first holder 50 easily absorbs heat, it is possible to suppress the hot gas or ejected substance ejected by the battery 40 from influencing the side of the adjacently located battery 40.

The present disclosure is not limited to the above described embodiments and variations thereof, and various improvements and changes can be made within the items described in the claims of the present application and within an equivalent range thereof.

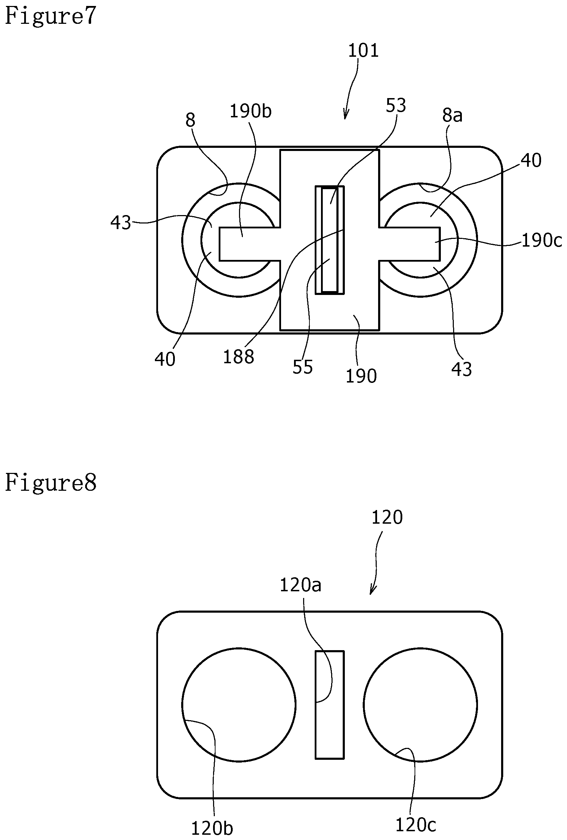

For example, in the above embodiment, a case where the partition 53 has a slit 57 and a part of the current collector plate 90 is accommodated in the slit 57 has been described. However, as shown in FIG. 7, that is, a schematic plan view corresponding to FIG. 3 in a variation of the battery pack 101, the current collector plate 190 may have a through hole 188 in which at least a part of the partition 53 is accommodated. More specifically, the current collector plate 190 may be a metal plate member having a through hole 188 corresponding to the planar shape of the head 55 in a plan view when viewed from the height direction. Further, the current collector plate 190 may be arranged such that the head 55 passes through the through hole 188 of the current collector plate 190. Then, in that arrangement state, the first bending portion 190b of the current collector plate 190 is in contact with the protruding terminal 43 of the first battery 40, and the second bending portion 190c of the current collector plate 190 may be in contact with the protruding terminal 43 of the second battery 40.

Moreover, in this case, the battery pack 101 may have a sheet 120 which is shown in a plan view of FIG. 8. The sheet 120 has a first through hole 120a that corresponds to the planar shape of the head 55 in a plan view when viewed from the height direction. Moreover, the sheet 120 further has a second through hole 120b at a place that overlaps in the height direction with the opening 8a of one battery accommodation chamber 8, and a third through hole 120c at a place that overlaps in the height direction with the opening 8a of the other battery accommodation chamber 8. The sheet is made of a fireproof sheet or a nonflammable sheet.

The current collector plate 190 is arranged such that the head 55 passes through the through hole 188 of the current collector plate 190, and then the head 55 is arranged on the current collector plate 190 so that the head 55 passes through the first through hole 120a of the sheet 120. Since arranging the sheet 120 in this way allows the sheet 120 to suppress the diffusion of the heat of the hot gas or ejected substance ejected by the battery 40 into a wide range, it is possible to make the battery pack 101 further safer. Note that, in this case, the sheet may not have a second through hole at a place that overlaps in the height direction with the opening of one battery accommodation chamber, and the opening of the other battery accommodation chamber may not have a third through hole at a place that overlaps in the height direction with the opening of the other battery accommodation chamber.

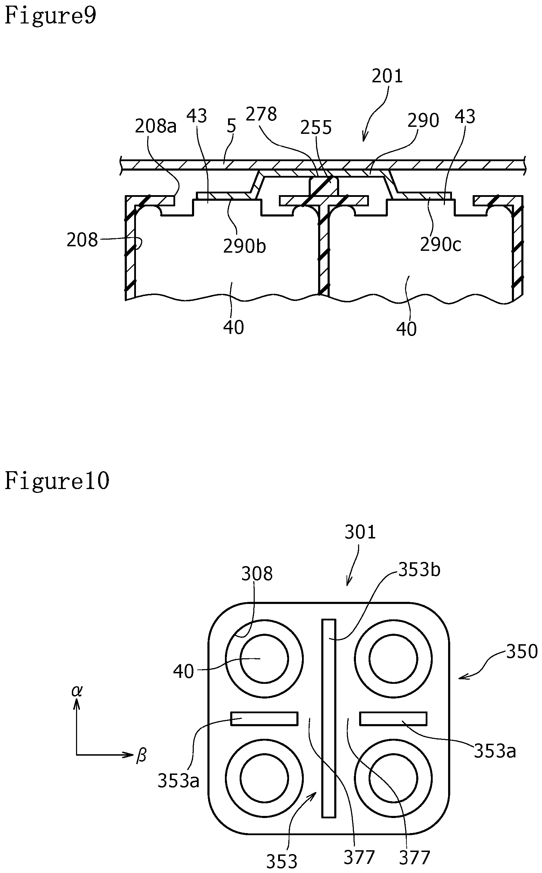

Further, as shown in FIG. 9, that is, the schematic sectional view corresponding to FIG. 5 in another variation of the battery pack 201, the battery pack 201 may have a current collector plate 290 that passes through on the upper side of the tip surface 278 of the head 255. Then, the current collector plate 290 may have a first bending portion 290b that bends in two stages at a position that overlaps in the height direction with the opening 208a of one battery accommodation chamber 208, and the tip side of the first bending portion 290b may press by its elasticity the protruding terminal 43 of the battery 40 accommodated in the battery accommodation chamber 208, thereby coming into contact with the protruding terminal 43. Similarly, the current collector plate 290 has a second bending portion 290c that bends in two stages at a position that overlaps in the height direction with the opening 208a of the other battery accommodation chamber 208, and the tip side of the second bending portion 90c may press by its elasticity the protruding terminal 43 of the battery 40 accommodated in the other battery accommodation chamber 208, thereby coming into contact with the protruding terminal 43.

Further, a case where the first holder 50 constituting the battery holder of the present disclosure defines at least a part in the height direction of the two battery accommodation chambers 8 has been described. However, the battery holder may define at least a part in the height direction of three or more battery accommodation chambers located at a same height position, and the battery holder may be used, for example, to connect three or more batteries in parallel.

For example, as shown in FIG. 10, that is, a schematic plan view corresponding to FIG. 6 in a further variation of the battery pack 301, configuration may be such that the battery holder 350 has four battery accommodation chambers 308 arranged in two rows and two columns at a substantially same height position, and four batteries 40 of the same orientation are accommodated in the four battery accommodation chambers 308. The partition 353 may have a first partition 353a which is arranged between the batteries 40 adjacent in the first direction indicated by arrow α and extends in the second direction, and a second partition 353b which is arranged between the batteries 40 adjacent in the second direction indicated by arrow β and extends in the first direction. Further, the second partition 353b may have a shape in which a partition partitioning one pair of two batteries 40 adjacent in the second direction and a partition partitioning the other pair of two batteries 40 adjacent in the second direction are connected. Further, the first partition 353a and the second partition 353b may face each other through a gap 377 in the second direction therebetween. In this way, it is possible not only to prevent the hot gas or ejected substance from the battery 40 from directly reaching the adjacent battery 40, thereby suppressing influence upon the adjacent battery 40, but also to allow the hot gas or ejected substance to flow via the gap 377. Therefore, a hot gas or ejected substance can be smoothly released to the outside via a through hole of the case of the battery pack 301 which is not shown.

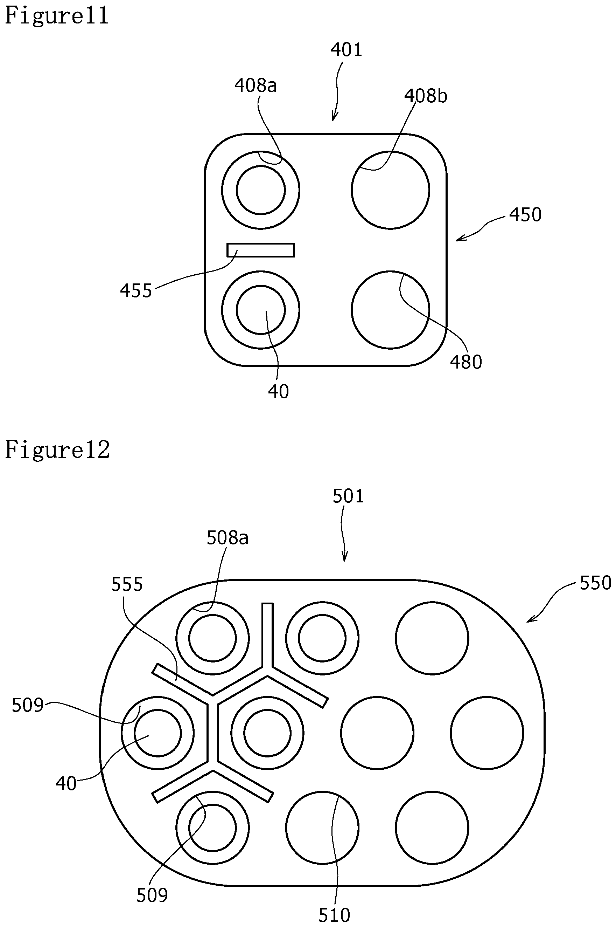

Description has been made on a case where the first holder 50 has only a plurality of battery accommodation chambers 8 that accommodate batteries 40 in the same orientation. However, as shown in FIG. 11, that is, a schematic plan view corresponding to FIG. 6 in a further variation of the battery pack 401, the battery holder 450 defines at least a part in the height direction of a plurality of first battery accommodation chambers 408a that accommodate batteries 40 in the same orientation, and at least a part in the height direction of a plurality of second battery accommodation chambers 408b that accommodate batteries 40 in the opposite orientation. The number of each of two types of battery accommodation chambers 408a, 408b which accommodate batteries 40 in different orientations from each other may be the same. Further, the head 455 may exists only between the two adjacent first battery accommodation chambers 408a where the exhaust valve of the battery 40 will be located on the opening 480 side. In this case, the plurality of batteries 40 are held at both end parts of each of the batteries 40 by two battery holders 450 on the top side and the bottom side, which are arranged in the height direction of battery, and the head 455 is formed depending on the orientation in which the battery 40 is accommodated in the both battery holders 450 on the top side and the bottom side.

Suppose that the first battery accommodation chamber and the second battery accommodation chamber are a battery accommodation part that accommodates batteries in opposite orientations to each other. At this time, regarding a battery pack in which a plurality of battery blocks are arranged in a straight line, a plurality of batteries accommodated in the first battery accommodation chamber of each battery block are connected in series from one side to the other side in the height direction. Further, a plurality of batteries accommodated in the first battery accommodation chamber in the battery block located at the other end are connected in series to a plurality of batteries accommodated in the second battery accommodation chamber in the battery block located at the other end described above. Further, a plurality of batteries accommodated in the second battery accommodation chamber of each battery block are connected in series from the other side to one side in the height direction. In this way, it is easy to produce a high-voltage and high-capacity battery pack. Using the battery holder 450 shown in FIG. 11 can realize such a high-voltage and high-capacity electrical connection.

In the battery pack 401 shown in FIG. 11, there was a circular opening 480 of the battery accommodation chamber 408a, 408b in the center of each square area partitioned into N rows and M columns (N, M is any natural number) in a plan view. However, the battery pack does not have to have an area partitioned into squares of N rows by M columns (N, M is an arbitrary natural number) in a plan view, for example, as shown in FIG. 12, that is, a schematic plan view corresponding to FIG. 11 in a further variation of the battery pack 501, the battery holder 550 may have an area partitioned into regular hexagons of N rows by M columns (N, M is an arbitrary natural number) in a honeycomb shape in a plan view, or may have an area partitioned into regular polygons other than the regular rectangles and regular hexagons, in N rows by M columns (N, M is any natural number) in a plan view. In this case as well, the head 555 may be existent only between two adjacent first battery accommodation chambers 509 where the exhaust valve of the battery 40 will be located on the opening 508a side.

Moreover, in the example shown in FIG. 12, although the plurality of battery accommodation chambers 509, 510 have two types of first battery accommodation chambers 509 and second battery accommodation chambers 510 in the same number, a plurality of battery accommodation chambers where the battery holder defines at least a part of the height direction, may all have the same shape even when the battery holder has an area partitioned into regular hexagons of N rows by M columns (N, M is an arbitrary natural number) in a honeycomb shape in a plan view. In the example shown in FIG. 2, description has been made on a case in which the holder assembly 15 has a first holder 50 that constrains one side in the height direction of the battery pair 45, a second holder 60 that constrains the other side in the height direction of the battery pair 45, and a third holder 70 that constrains the middle part in the height direction of the battery pair 45. However, the holder assembly may only have a first holder that constrains one side in the height direction of the battery pair and a second holder that constrains the other side in the height direction of the battery pair, and may not have a third holder that constrains a middle part in the height direction of the battery pair.

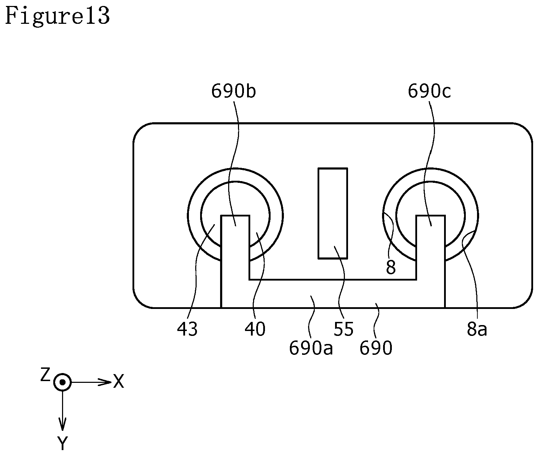

In the example shown in FIG. 7, the current collector plate 190 has a through hole 188 in which at least a part of the partition 53 is accommodated, but for example, as shown in FIG. 13, the current collector plate 690 may be a metal plate member in one piece, having a U-shape in a plan view when viewed from the height direction. Note that the U-shape in a plan view when viewed from the height direction includes a shape which has: for example, in the plan view, a stretching portion 690a extending in a straight line; a first protruding portion 690b extending on the first side (in the present embodiment, the starting point side of arrow Y shown in FIG. 13) in an orthogonal direction (in the present embodiment, the direction indicated by arrow Y in FIG. 13) which is substantially orthogonal to the extending direction from the end part on the first side (in the present embodiment, the starting point side of arrow X shown in FIG. 13) in the extending direction (in the present embodiment, the direction indicated by arrow X in FIG. 13) of the straight-line extending portion 690a; a second protruding portion 690c extending on the first side (in the present embodiment, the starting point side of arrow Y shown in FIG. 13) of the orthogonal direction from the end part of the second side (in the present embodiment, the endpoint side of arrow X shown in FIG. 13) in the extending direction of the straight-line extending portion 690a, and in which the length of the first protruding portion 690b and the second protruding portion 690c are substantially the same. Further, the orthogonal direction substantially orthogonal to the extending direction may be defined, for example, as a direction in which the inclination angle with respect to the extending direction is less than or equal to 5°.

In other words, as shown in FIG. 13, when the direction orthogonal to both the extending direction of the line connecting the centers of each opening 8a of the two adjacent battery accommodation chambers 8 (the direction indicated by arrow X in FIG. 13) and the height direction (indicated by Z in FIG. 13) is supposed to be an orthogonal direction (the direction indicated by arrow Y in FIG. 13), the current collector plate 690 may have a stretching portion 690a that stretches in the X direction and two protruding portions 690b and 690c that protrude in the Y direction from both end parts of the stretching portion 690a. Further, the first protruding portion 690b extending in the Y direction may be located on the first side in the X direction of the head 55 extending in the Y direction (in the present embodiment, on the starting point side of arrow X shown in FIG. 13), and the second protruding portion 690c extending in the Y direction may be located on the second side in the X direction of the head 55 (in the present embodiment, the endpoint side of arrow X shown in FIG. 13). Then, in that arrangement state, the tip part of each protruding portion 690b, 690c of the current collector plate 690 may come into contact with the protruding terminal 43 of the battery 40.

In this way, a part of the hot gas or ejected substance from the battery 40 bounces back to the current collector plate 690 and becomes not able to reach the adjacent battery 40. Therefore, the hot gas or ejected substance released from the abnormally heated battery 40 can be suppressed from influencing the adjacent battery 40. Furthermore, since the current collector plate 690 can be configured to be nonexistence in an end area on one side of the Y direction (in the present embodiment, the starting point side of arrow Y shown in FIG. 13) in a plan view when viewed from the height direction, the hot gas or ejected substance are not present on one side in the Y direction (in the present embodiment, the start point side of arrow Y shown in FIG. 13), it is possible to allow the hot gas or ejected substance to flow through the end area on one side in the Y direction where the current collector plate 690 does not exist. Therefore, hot gas or ejected substance can be smoothly discharged to the outside via a through hole in the case of the battery pack not shown.

### REFERENCE SIGNS LIST

1,101,201,301,401,501 Battery pack, 5 Case, 6 Through-hole, 8,208,308,408a,408b Battery accommodation chamber, 8a,208a,480,508a Opening, 10 Battery block, 15 Holder assembly, 40 Battery, 41 Outer can, 42 Sealing assembly, 43 Protruding terminal, 45 Battery pair, 48 Gasket, 50 First holder, 51 Side part, 52 Sheathing, 53,353 Partition, 53a Portion that partitions cylindrical outer peripheral surface of outer can of adjacent batteries in a partition, 55,255,355,455,555 Head, 55a Tip of head, 55b Portion in head overlapping in the height direction with one battery accommodation chamber 8 In two adjacent battery accommodation chambers, 55c Portion in head overlapping in the height direction with the other battery accommodation chamber in two adjacent battery accommodation chambers, 57 Slit, 60 Second holder, 70 Third holder, 78,278 Tip surface of head, 90,190,290,690 Current collector plate, 90a Accommodated part, 94a,94b Exhaust path, 120 Sheet, 188 Through hole in current collector plate, 350,450,550 Battery holder, 353a First partition, 353b Second partition, 377 Gap, 408a,509 First battery accommodation chamber, 408b,510 Second battery accommodation chamber.

## Claims

1. A battery holder holding at least a part in a height direction of a plurality of batteries which are arranged in an alignment, the battery holder comprising:
an opening facing an end surface on a formation side of an exhaust valve in a height direction of the plurality of batteries; and
an exhaust path that discharges a gas ejected from the exhaust valve, wherein
a head protruding to the side opposite the battery side in the height direction is provided, and
the head is provided in a corresponding position between adjacent batteries among the plurality of batteries and is provided between each openings corresponding to the adjacent batteries.

2. The battery holder according to claim 1, further comprising:
a side part which is arranged so as to surround at least a part in the height direction of the plurality of batteries; and a partition that partitions between the two adjacent batteries, wherein
the battery holder defines at least a part in the height direction of each battery accommodation chamber in a plurality of battery accommodation chambers that accommodate a plurality of batteries,
the partition has a head protruding to a position higher in the height direction than an opening of the battery accommodation chamber, and
the head includes a portion that overlaps in the height direction with one of the battery accommodation chambers in adjacent two adjacent battery accommodation chambers and includes a portion that overlaps in the height direction with the other of the battery accommodation chambers in the two battery accommodation chambers.

3. The battery holder according to claim 1 or 2, wherein
a height in the height direction of a tip of the head is larger than a height in the height direction of the exhaust valve of the battery.

4. The battery holder according to any one of claims 1 to 3, wherein
when a direction which is orthogonal to both an extending direction of a line connecting centers of each opening of two adjacent battery accommodation chambers, and the height direction is supposed to be an orthogonal direction, the dimension in the orthogonal direction of the head is larger than the dimension in the orthogonal direction of the exhaust valve of the battery.

5. The battery holder according to any one of claims 1 to 4, wherein
when a direction which is orthogonal to both an extending direction of a line connecting the centers of each opening of two adjacent battery accommodation chambers, and the height direction is supposed to be an orthogonal direction, the dimension in the orthogonal direction of the head is larger than the dimension in the orthogonal direction of the opening.

6. The battery holder according to any one of claims 1 to 5, further comprising:
a first holder and a second holder which face respectively both end surfaces in the height direction of the plurality of batteries, wherein
the first holder and the second holder define a battery accommodation chamber that accommodates the end surfaces of the plurality of batteries, which face the first holder and the second holder,
the head is formed in one piece with the first holder, and
the first holder and the second holder are made of a thermoplastic resin or a thermosetting resin.

7. The battery holder according to any one of claims 1 to 6, further comprising
a plurality of battery accommodation chambers that accommodate the plurality of batteries in a same orientation.

8. A battery pack comprising a battery holder according to any one of claims 1 to 7, wherein
the partition has a slit that extends in a direction orthogonal to the height direction, and the battery pack further comprises:
a current collector plate including an accommodated part accommodated in the slit.

9. A battery pack comprising:
a battery holder according to any one of claims 1 to 7; and
a current collector plate having a through hole in which at least a part of the partition is accommodated.

10. A battery pack comprising:
a battery holder according to any one of claims 1 to 7; and
a case that accommodates the battery holder, wherein
the case has one or more through holes.

11. A battery pack comprising:
a battery holder according to any one of claims 1 to 7; and
a current collector plate having a U-shape in a plan view when viewed from the height direction.
